# EUROPEAN PATENT APPLICATION

(11) **EP 3 909 902 A1**
(43) Date of publication of application: **17.11.2021**
(21) Application number: 20174865.4
(22) Date of filing: 15.05.2020
(51) Int. Cl.: B66C 1/62, B62B 3/10, B65G 65/24, B66F 9/18

(54) **A LIFT DEVICE FOR HANDLING VESSELS**

(71) Applicant: Hovmand A/S, 4600 Køge (DK)
(72) Inventor: Hovmand, Søren, 2500 Valby (DK); Seneberg, Kasper Anstrup, 2610 Rødovre (DK); Rytman, Simon, 4180 Sorø (DK)
(74) Representative: Patrade A/S

(57) **Abstract**

Lifting device (1) and a handling tool (9) for handling vessels (18) with a dedicated lifting point. The lifting device comprises a mobile base (2) and a lifting unit (4) arranged on the support frame (3). The lifting unit is configured to be attached to a handling tool with a gripping element (13) intended to grip a handle or end rim of the vessel. The handling tool comprises support elements (11, 27) arranged at the sides to add support to the vessel during the tipping or turning. A manipulating unit (15) is used to either tip or turn the vessel when it is lifted into the desired position.

## Description

### Field of the Invention

The present invention relates to a lifting device for lifting vessels with an integrated emptying function, wherein the lifting device provides support for the vessel during emptying.

Further, the present invention relates to a handling tool configured to be mounted to a lifting device, where the handing device provides support for the vessel during tipping or turning.

### Background of the Invention

Vessels are widely used today for holding various items, such as liquids, slurry, solids and other items. Some vessels are designed to hold a large volume and are thus heavy to lift when they are full. The vessels may be designed for industrial applications as well as domestic applications.

It is known that such vessels may have many different shapes and sizes depending on their application and usage. The size and shape of these vessels may be defined according to international standards and thus dedicated to hold a certain volume. Further, the vessels may be made of a durable material, such as plastics, aluminium, stainless steel, paperboard or another suitable material.

Some vessels may include one or more dedicated handles for lifting the vessel. Instead, these vessels may include one or more lifting bracket or openings dedicated to act as handles for lifting the vessel. Workers may thus use these handles when handling the vessels however, injuries may occur if the worker does not use correct handling techniques.

Mobile lifters may be used when performing heavy lifting. One example is the model IMPACT from the applicant, where the lifter comprises wheels for moving it around and a lifting unit attached to the base. A combined turning and gripping tool may be attached to the lifting unit and used to turn the vessel around a turning axis parallel to the driving direction. Grippers on each side are configured to apply a gripping force to the sides of the drum or bin to ensure a firm grip during handling.

Another example of a lifter is the model TS450 from the company GlobalTools, where a tipping tool is attached to the lifting unit. The tipping tool comprises a support frame on which a handle with a metal belt is rotatable attached. The belt is secured around the sides of a drum and it is tipped around a tipping axis defined by bearings on the support frame. Other examples of a lifter are described in FR 2533202 A1 and CN 203781373 U.

MX 2019009906 A describes a lifter designed to lift and turn water bottles for placement on a water dispenser unit. The lifter comprises a lifting unit attached to a support frame, where a turnable holding frame is mounted to the lifting unit. The worker manually lifts and positions the water bottle in the holding frame. The water bottle is then lifted into position and turned so that it can be lowered onto an interface on the water dispenser unit. The holding frame is designed specifically for that type of water bottles and cannot be used for vessels having a different shape or size.

An alternative lifting device is described in US 2009/0304487 A1, where a lever arm is rotatable connected to a vertical support frame for lifting water bottles onto the top of a water dispenser unit. A gripping frame is secured to the sides of the water bottle, where the gripping frame is able to tip around a tipping axis defined by bearings on the lever arm.

Common for the solutions described above is that they all grip or clamp around the sides of the vessel with a certain amount of gripping or clamping force. This is not an issue if the sides of the vessel are reinforced, e.g. by hoops or integrated ribs. However, some vessels are not reinforced at the sides, e.g. plastic cans, which may deform if not properly supported during emptying.

Mobile mini cranes or workshop cranes may be used instead of lifters to lift the vessel into a desired height or position. Alternatively, a crane arm tool may be attached to the lifting unit of the lifter, wherein the vessel is secured to the crane arm using grippers or a strap and hook. However, these cranes do not include a tipping or turning function and thus only be used for lifting vessels.

Another lifting device is the Keg-lifter from Southern-Tool, comprising wheels for moving it around and a single lifting rack with an electrical lifting unit. The lifting unit comprises a single lifting bracket with a hook for engaging the handle of the keg. This lifting device is dedicated for lifting and lowering kegs and has no other functions.

### Object of the Invention

An object of the invention is to provide an alternative lifting device and handling tool that overcome the abovementioned problems.

Another object of the invention is to provide a lifting device and handling tool that reduce the risk of the vessel deforming during emptying.

Yet another object of the invention is to provide a lifting device and handling tool which have a combined lifting and emptying function.

### Description of the Invention

An object of the invention is achieved by a lifting device, comprising:
- a mobile base,
- a support frame arranged on the mobile base,
- the support frame comprises a lifting unit configured to raise or lower a vessel in a lifting direction between a first position and a second position,
- a handling tool connected to the lifting unit, the handling tool comprises at least one gripping element configured to grip a vessel,
- a manipulating unit configured to at least turn or tip the vessel in a turning or tipping direction between a first orientation and a second orientation, the manipulating unit being arranged on the handling tool or between the handling tool and the lifting unit, characterised in that the handling tool further comprises at least one support element configured to add support to a side of the vessel during turning or tipping, and that the at least one gripping element is arranged relative to the at least one support element and configured to grip a dedicated lifting point on the vessel.

This provides a lifting device suitable for lifting vessels using one or more dedicated lifting points on the vessel. Such points are designed to have sufficient strength to enable the vessel to be lifted in these points. Furthermore, the present lifting device provides support to the vessel during the tipping or turning. This allows for a more safe lift. This further eliminates the risk of deforming the vessel and in turn damaging the content within the vessel.

Conventional lifting devices apply a clamping force to the sides of the vessel, thus firmly holding the vessel in place during lifting using friction. This could potentially deform or damage the vessel if the vessel is an open-ended vessel, such as a bucket with the lit removed. This also making them less suited for vessels, e.g. plastic cans and buckets, where the sides are able to elastically deform during lift and/or emptying. If conventional lifting devices were used to lift such vessels, the sides of the vessel would elastically deform during emptying. Thereby reducing the friction force and the vessel is likely to slip out of engagement with the clamping means.

The base is fitted with wheels or endless belts enabling the lifting device to be moved along a surface, e.g. a floor, and into position relative to a vessel. However, other means of moving the lifting device may also be used. This enables the lifting device to act as a mobile lifting device. The base may optionally be fitted with brakes configured to lock the wheels or belt. This allows for a more safe lift and tipping/turning.

Preferably, the lifting device may have a lightweight and compact design, thereby making it easy to move and to operate. The lifting device may be operated manually using a local user terminal, e.g. with handles, or remotely using a remote controller. The lifting device may preferably have its own energy source, e.g. a battery pack, for powering the lifting unit and/or other electrical components of the lifting device. Other energy sources, such as a hydraulic or pneumatic energy source, may be used. Alternatively, the lifting device may be operated mechanically, e.g. via a winch system.

Alternatively, an external energy source may be used to power the lifting device, where the external energy source may be coupled to an interface on the lifting device. In example, but not limited to, an electrical machine, e.g. a hand-held power tool, may be a coupled to a drivable unit, e.g. a drive shaft, on the lifting device.

The lifting device has a front end and an opposite back end, as well as a first side and an opposite second side. The front and back ends define a length direction, where the front end further defines a driving direction. The first and second sides define a width direction. The lifting device further has a height direction defined as being perpendicular to the length and width directions.

In one embodiment, the handling tool further comprises a safety mechanism configured to lock the at least one gripping element when gripping the lifting point.

The safety mechanism may be configured to interact with the gripping element to lock the gripping element in engagement with the vessel. The safety mechanism and gripping element may be configured as a combined unit, or separate units. The safety mechanism may be operated between a locked position and an unlocked position. This allows for a more safe lift compared to conventional lifting devices as the safety mechanism prevents the vessel from slipping out of engagement.

The safety mechanism may simple be a locking pin which can be intersected into the gripping element(s). The safety mechanism may also comprise a locking structure that can be moved into position over the gripping element to prevent the gripping element from accidently slipping out of engagement with a handle of the vessel. The safety mechanism may also comprise two side elements spaced apart so that the handle can be positioned between the side elements. A locking element, e.g. a pin or plate, may then be moved, e.g. rotated, into connection with both side elements to lock the handle between the side elements. However, other types of safety mechanisms may also be used.

The safety mechanism may alternatively be a self-locking feature on the gripping element, such as a spring locking latch. This prevents the gripping element from accidently slipping out of engagement with the handle or an eye on the handling tool.

In one embodiment, the at least one support element comprises a first support element and at least a second support element, the first and second support elements being arranged at a distance from each other where the distance corresponds to at least an outer dimension of the vessel.

The handling tool may be fitted with one or more support elements arranged on one side, e.g. the first or second side. Alternatively, one or more first support elements may be arranged on the first side and one or more second support elements may be arranged on the second side. This adds support to the sides of the vessel during the tipping or turning.

The support elements may be shaped as plate-like elements, U-shaped frame elements, or support rods. However, other shapes may be used. The support elements may project from a local back end of the handling tool towards a local front end of the handling tool. This enables the vessel to be positioned between the first and second support elements and brought into engagement with the gripping element.

The support elements may be connected to a frame structure extending in the height direction. The frame structure further comprises a mounting interface for mounting to a manipulating unit, i.e. a first manipulating unit, or a matching interface on the lifting unit. Alternatively, the support elements may be interconnected via an intermediate support element on which the mounting interface is arranged. This adds support to the vessel during the turning.

The frame structure and support elements may be configured to turn around a turning axis defined by the manipulating unit. The turning axis may be parallel to the length direction. Alternatively, an adapter may be used if the turning axis is angled relative to at least the length direction, as described later.

The frame structure may alternatively be formed by two plate-shaped elements spaced apart in the height direction.

Optionally, a U-shaped boom may be pivotally connected to the first and second support elements. The boom may be configured to tip around a tipping axis defined on first and second support elements using another manipulating unit, i.e. a second manipulating unit. The legs of the boom may extend from a local top side of the handling tool to a local bottom side of the handling tool. This adds support to the vessel during the tipping.

A removable support element may be arranged at the local front end and attached to the boom. This support element may be configured to add further support to the vessel during the tipping. The support element may be attached by a click coupling, fasteners or other fastening means.

Alternatively, the boom may further comprise spring-loaded support elements arranged at the local front end. The spring-loaded support elements may be configured to be pushed to the sides when positioning the vessel within the handling tool. Once in position, the support elements may spring back into their initial positions. This also adds further support to the vessel during the tipping.

In one embodiment, the at least one gripping element is arranged at a height above the at least one support element in the lifting direction, wherein the gripping element and/or the support element is adjustable in the height direction and/or in the distance direction.

The handling tool may be designed for a particular size and/or type of vessel, and thus the distance and height of the handling tool may correspond to the outer dimensions of that vessel. This allows the handling tool to have fixed distance and height.

Alternatively, the handling tool may be adjustable so that it may be adjusted to fit different types and/or sizes of vessels. The first and second support elements may be adjustable connected to the frame structure or the intermediate support element so that the distance may be varied. Alternatively or additionally, the gripping element may be arranged on a boom, e.g. a L- or J-shaped boom, connected to the first and second support elements. The boom may be adjustable so that the height of the gripping element may be varied. The adjustment may be performed using a series of adjustment points, e.g. holes, formed in the intermediate support element and/or in the boom. However, other types of adjustments may be used.

In one embodiment, the at least one support element is configured to secure the vessel to the handling tool by applying a clamping or holding force to the side of the vessel.

Instead of using a first and second support elements arranged on opposite sides, the support element may be formed as a clamping or holding structure that is able to secure the vessel to the handling tool. In example, a strap, a chain, a belt or a wire may be used to secure the vessel relative to the handling tool. Alternatively, one or more flexible metal straps may be used to secure the vessel to the handling tool. This presents the vessel from moving during the tipping or turning.

In one embodiment, the safety mechanism is configured to be powered by an energy source or mechanically by an operator.

Instead of operating the safety mechanism manually, the safety mechanism may be powered by a local or external energy source, e.g. a battery pack, a hydraulic pump, a pneumatic pump or another type of energy source. This allows for the safety mechanism to be operated from a distance, preferably via the same user terminal as the lifting unit or via a remote control unit.

In one embodiment, the lifting device further comprises a mounting arm configured to be mounted between the lifting unit and the handling tool.

The handling tool may be mounted directly to the lifting unit via the matching interfaces. Alternatively, a manipulating unit may be mounted to the lifting unit and further to the handling tool. The manipulating tool may also form an integrated part of the lifting unit or the handling tool. Alternatively, the manipulating unit may be arranged between the support elements and the U-shaped boom, as described earlier.

The manipulating unit may simple comprise a manually operated mechanism which can be operated via a handle. The mechanism is configured so that the handling tool or U-shaped boom may be tipped or turned between a first orientation and at least a second orientation. The manipulating unit may in example be a turning unit or a tipping unit, the configuration of such tipping and turning units is known to the skilled person.

In one embodiment, the manipulating unit is configured to be powered by an energy source or mechanically by an operator.

Instead of operating the manipulating unit manually, the manipulating unit may be powered by a local or external energy source, e.g. a battery pack, a hydraulic pump, a pneumatic pump or another type of energy source. This allows for the manipulating unit to be operated from a distance, preferably via the same user terminal as the lifting unit or via a remote control unit.

In one embodiment, the dedicated lifting point is a handle, a lifting bracket or a rim arranged at one end of the vessel.

The lifting point may preferably be formed as a handle, a lifting bracket, an end rim or similar lifting points, which all form a well-defined lifting point on the vessel. The gripping element may be shaped according to the handle, lifting bracket or end rim on the vessel. Since the lifting point on different types of vessels as well as different sizes of vessels, the lifting device may grip a larger variety of vessels compared with conventional lifting devices.

All conventional lifting devices clamp or grip around the sides of the vessel and are often designed for a particular type and size of vessel. Therefore, they are only able to grip a small number of vessels.

One object of the invention is also achieved by a handling tool for lifting vessels, comprising:
- an interface configured to be mounted directly or indirectly to a lifting unit of a lifting device as described above,
- at least one gripping element configured to grip a dedicated lifting point on a vessel, and
- at least one support element configured to add support to a side of the vessel during turning or tipping of the vessel.

This provides an improved handling tool capable of gripping a larger variety of vessels as the vessels are lifted in a dedicated lifting point, as described above. The handling tool is well-suited to lift and support vessels with un-reinforced sides, such as buckets and plastic cans. Such vessels are difficult to lift using conventional lifting devices as they apply a clamping or holding force to the sides.

The handling tool has an interface configured to be mounted directly to a matching interface on the lifting unit. Alternatively, the handling tool may be mounted to a manipulating unit that in turn may be mounted to the lifting unit. The manipulating unit may thus be formed as a stand-alone unit or an integrated part of the lifting unit.

In one embodiment, the handling tool further comprises an integrated manipulating unit configured at least turn or tip the vessel in a turning or tipping direction between a first orientation and a second orientation.

The manipulating unit may instead be integrated into the handling tool to form a combined unit. The manipulating unit may be arranged at the interface and configured to turn the handling tool and vessel in the turning direction.

Alternatively, the manipulating unit may be arranged at the free end of the first or second support element and configured to tip the U-shaped boom and vessel in the tipping direction.

In a further alternative, a first manipulating unit may be arranged at the interface and a second manipulating unit may be arranged at the free end of first or second support element. The second manipulating unit and U-shaped boom may either be permanently attached to the support elements or be removable attached to the support elements. This increases the functionality of the handling tool.

An adapter may further be configured to be mounted between the lifting unit and the handling tool. The adapter may comprise one interface for mounting to the lifting unit and another interface for mounting to the manipulating unit or handling tool. The two interfaces may be arranged at an angle, e.g. between 0-90 degrees, relative to each other. This enables the handling tool to be angled relative to the lifting unit, and thus the turning or tipping axis to be placed at an angle relative to the length direction.

The adapter may preferably be arranged in a horizontal plane defined by the length and width directions. However, the adapter may be arranged in any planes between 0-180 degrees relative to the horizontal plane. The orientation of the handling tool may thus be adapted to a particular working station and/or a desired use.

The adapter may form an integrated part of the lifting unit or the handling tool. Alternatively, the adapter may be a separate unit.

The adapter may be formed by a first part comprising the one interface and a second part comprising the other interface. The first and second parts may be rotatably connected to each other via an intermediate rotation interface. This rotation interface may be arranged at an angle relative to one or both interfaces in the plane of the adapter. The angle may be between 0-90 degrees, preferably between 30-60 degrees, e.g. 45 degrees. Alternatively, the rotation plane may be arranged perpendicularly to one or both interfaces so that the adapter acts as a rotating unit. This further increases the flexibility of the handling tool.

The manipulating unit, i.e. the first manipulating unit, may be integrated into the first or second part of the adapter, thus forming a combined unit.

In one embodiment, the handling tool further comprises a mounting arm, where one end of the mounting arm is connected to the manipulating unit and the other end of the mounting arm is configured to be mounted to the lifting unit.

A mounting arm, preferably an L-shaped arm, may be fitted between the lifting unit and the handling tool. This allows the same handling tool used to turn the vessel also to be used to tip the vessel. The mounting arm may simply be installed between the handling tool and the lifting unit. No need to replace the handling tool with a different handling tool.

In one embodiment, the at least one gripping element is arranged on a boom configured to be positioned above the vessel.

The gripping element may be arranged on the U-shaped boom or the L-shaped boom, as described earlier. One leg of the boom may be arranged at the local back end while another leg extends partly over the vessel. This allows the gripping element to be positioned above the dedicated lifting point on the vessel.

The gripping element may optionally be configured to be adjusted along the length of the boom. Alternatively or additionally, the leg of the boom may be adjustable so that its length may be varied. This adjustment may be performed using clamps, adjustment points or other adjustable means. This allows the position of the gripping element to be varied so that it is positioned correctly over the dedicated lifting point.

Alternatively, two or more gripping elements may be arranged on the boom so that the handling tool may engage more than one dedicated lifting point on the vessel.

The gripping element may be a hook, e.g. a safety hook. The gripping element may be attached to a strap, chain or wire which in turn may be attached to the boom. Other gripping element may also be used.

In one embodiment, the at least one gripping element is arranged on a frame element on the handling tool.

The gripping element may instead be arranged on a frame element of the frame structure. The frame element may form one leg of the L-shaped boom described earlier. Additional support elements may be arranged on the frame element for supporting the vessel relative to the frame structure.

The gripping element may be shaped to grip an end rim of the vessel so that the vessel may be lifted into the desired height.

One object of the invention is further achieved by a use of a lifting device as described above or a handling tool as described above to lift vessels with a dedicated lifting point.

Unlike conventional lifting devices, the present handling tool and lifting device are particularly suited to lift and turn/tip vessels with dedicated lifting points. The vessel may advantageously be a can, a bucket, a drum, a keg, a mixing bowl or another type of vessel with a well-defined lifting point.

The vessel may be made of any suitable material, such as plastics, aluminium, stainless steel, paperboard or another suitable material. The plastic may, in example but not limited to, be polyethylene (PE), polyvinylchloride (PVC), polypropylene (PP) or polystyrene (PS). The vessel may further be shaped to hold a certain volume according to international standards, e.g. ISO standards or DIN standards.

### Description of the Drawing

The invention is described by example only and with reference to the drawings, wherein:
- Fig. 1: shows an embodiment of a lifting device according to the invention,
- Fig. 2: shows a first embodiment of a handling tool for the lifting device,
- Fig. 3: shows the handling tool with a second embodiment of the gripping element,
- Figs. 4a-b: show a third embodiment of the gripping element,
- Fig. 5: shows the lifting unit with a mounting arm and the handling tool,
- Fig. 6: shows a second embodiment of the support element,
- Fig. 7: shows a second embodiment of the frame structure of the handling tool,
- Fig. 8: shows a fourth embodiment of the gripping element,
- Figs. 9a-d: show various embodiments of the vessel,
- Fig. 10: shows a second embodiment of the handling tool,
- Fig. 11: shows a third embodiment of the handling tool,
- Fig. 12: shows a second embodiment of the first boom,
- Fig. 13: shows an alternative embodiment of the gripping element and safety mechanism,
- Fig. 14: shows a forth embodiment of the handling tool. and
- Fig. 15: shows two embodiments of an adapter for installation between the lifting unit and the handling tool.

In the following text, the figures will be described one by one, and the different parts and positions seen in the figures will be numbered with the same numbers in the different figures. Not all parts and positions indicated in a specific figure will necessarily be discussed together with that figure.

### Reference list

- 1.: Lifting device
- 2.: Base
- 3.: Support frame
- 4.: Lifting unit
- 5.: Lifting direction
- 6.: Control unit
- 7.: Handle
- 8.: Energy source
- 9.: Handling tool
- 10.: Frame structure
- 11.: Support element
- 11a.: First support element
- 11b.: Second support element
- 12.: Boom
- 13.: Gripping element
- 14.: Safety mechanism
- 15.: Manipulating unit
- 16.: Turning direction
- 17.: Additional support elements
- 18.: Vessel
- 19.: End rim
- 20.: Mounting arm
- 21.: Handle
- 22.: Tipping direction
- 23.: Metal bands
- 24.: Plate-like elements
- 25.: Gripping element
- 26.: Boom
- 27.: Additional support elements
- 28.: Handling tool
- 29.: Boom
- 30.: Removable support element
- 31.: Spring-loaded support elements
- 32.: Gripping element
- 33.: Support structure
- 34.: Gripping element
- 35.: Adapter
- 36.: First part
- 37.: Second part
- 38.: Rotation interface
- 39.: Rotation direction
- h.: Height
- d.: Distance

### Detailed Description of the Invention

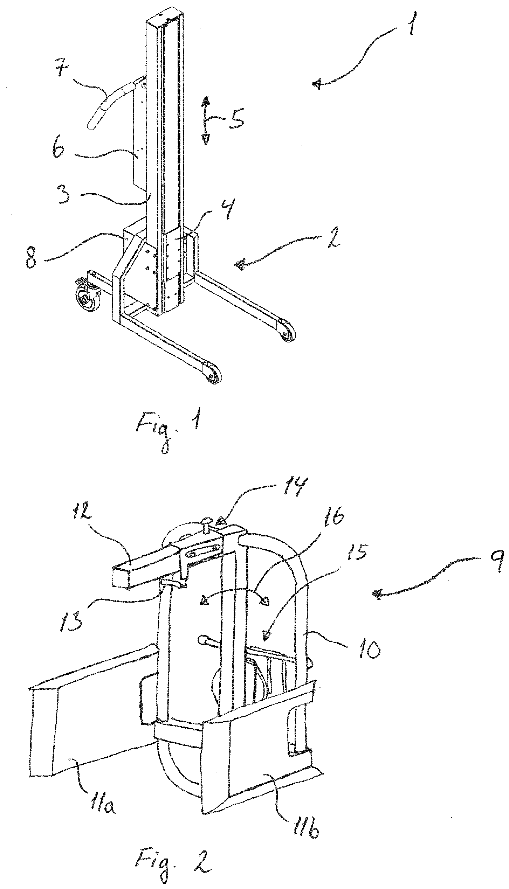

Fig. 1 shows an embodiment of a lifting device 1 according to the invention without a handling tool. The lifting device comprises a mobile base 2 with wheels for moving it around on a surface. A support frame 3 with a lifting unit 4 is arranged on the base 2, where the lifting unit 4 is configured to raise or lower a handling tool (see figs. 2-3, 5-6 and 10-14) in a lifting direction 5.

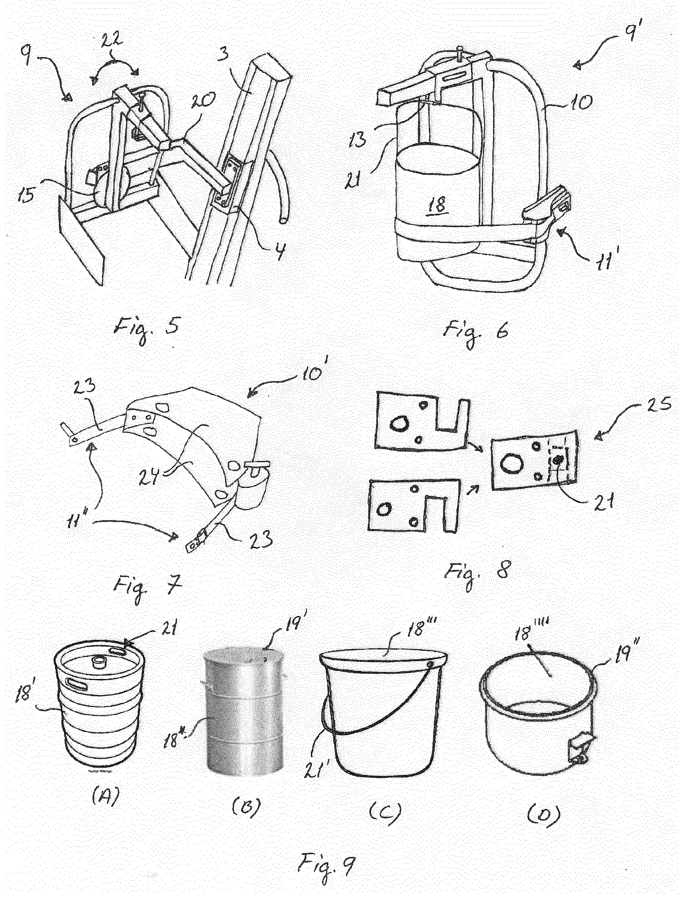

The operation of the lifting unit 4 and optionally the handling tool is controlled by a control unit 6. The control unit 6 is here shown as a user terminal fitted with handles 7 enabling the worker to steer the lifting device 1 into position relative to a vessel (see figs. 9a-d). The lifting device 1 is able to lift the vessel directly from the surface and further tip or turn the vessel using the handling tool, thus no additional tipping/turning devices are needed.

The lifting unit 4 is powered by a local energy source 8, e.g. a battery pack. The energy source optionally also provides to the handling tool via a coupling interface.

The lifting device 1 has a front end and an opposite back end and two opposite sides arranged between the front and back ends. Here, the control unit 6 and the energy source 8 are located at the back end.

Fig. 2 shows a first embodiment of a handling tool 9 for use with the lifting device 1. The handling tool 9 comprises a frame structure 10 formed by a number of frame elements. The frame elements may also be used as a handle when manipulating the handling tool 9.

Here, a first support element 11a and a second support element 11b are connected to the frame structure at opposite sides. The first and second support elements 11a, 11b are configured to add support to the vessel during the turning. The first and second support elements 11a, 11b are intended to be positioned on opposite sides of the vessel.

An elongated boom 12 is arranged at the top of the frame structure 10 on which a first embodiment of a gripping element 13 is arranged. The gripping element 13 is here shaped to grip a handle (see fig. 6) on the vessel. Further, a safety mechanism 14 is arranged on the boom 12. The safety mechanism 14 is configured to lock the gripping element 13 when gripping the handle.

Here, a manipulating unit 15 is mounted to an interface on the frame structure 10. The manipulating unit 15 has another interface configured for mounting to an interface on the lifting unit 4. In this embodiment, the manipulating unit 15 acts as a turning unit for turning the handling tool 9 and thus the vessel in a turning direction 16.

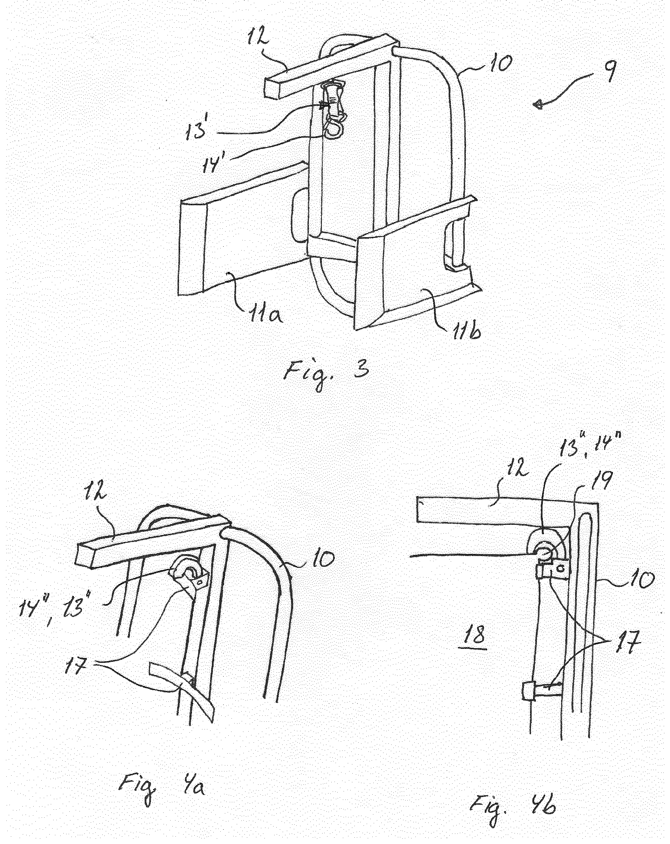

Fig. 3 shows the handling tool 9 with a second embodiment of the gripping element 13'. Here, the gripping element 13' is formed by a hook attached to a strap which, in turn, is attached to the boom 12. The safety mechanism 14' is here integrated with the gripping element 13' to form a safety hook.

Similar to the embodiment shown in fig. 2, the gripping element 13' is shaped to grip the handle of the vessel.

Figs. 4a-b show a third embodiment of the gripping element 13" and the safety mechanism 14". Here, the gripping element 13" is arranged on a frame element of the frame structure 10. Additional support elements 17 are also arranged on the frame element to add support to the vessel 18 during the tipping or turning.

Here, the gripping element 13" is shaped to grip an end rim 19 on the vessel 18. The end rim 19 forms a dedicated lifting point for lifting the vessel 18.

Fig. 5 shows the lifting unit 4 with a mounting arm 20 arranged between the handling tool 9 and the lifting unit 4. The mounting arm 20 is here shaped as an L-shaped arm forming to opposite ends. One end of the mounting arm 20 is configured to be mounted to the interface of the manipulating unit 15. The other end of the mounting arm 20 is configured to be mounted to the interface on the lifting unit 4.

In this embodiment, the manipulating unit 15 acts as a tipping unit for tipping the handling tool 9 and thus the vessel 18 in a tipping direction 22.

Fig. 6 shows a second embodiment of the support element 11' of the handling tool 9'. Here, the gripping element 13 is engaging the handle 21 of the vessel 18 and the safety mechanism 14 is in a lock position to prevent the handle 21 from slipping out of the gripping element 13.

The support element 11' is here configured as a holding unit arranged on one side of the frame structure 10. The support element 11' comprises a strap that is able to be placed around the vessel 18 and attached to the opposite side of the frame structure 10. This enables the vessel 18 to be secured to the handling tool 9'.
Fig. 7 shows a second embodiment of the frame structure 10' of the handling tool 9. Here, the support elements 11" are formed by metal bands 23 that are flexible and able to bend around the vessel 18 and jointed at their free ends. This also enables the vessel 18 to be secured to the handling tool 9'.

Here, frame structure 10' is formed by two plate-like elements 24 that are spaced apart.

Fig. 8 shows a fourth embodiment of the gripping element 25 where the gripping element 25 is formed by two sub-elements that are joined together. Each sub-element has a recess for receiving the handle 21 of the vessel 18. The recesses face in opposite directions so that they grip the handle from both sides. A locking pin (not shown) may be inserted into a through in the sub-elements to lock the gripping element 25. The locking pin thus acts as the safety mechanism during the lifting.

Figs. 9a-d show various embodiments of the vessel 18. The vessel 18 may be a keg 18' with integrated handles 21 at the ends, as shown in fig. 9a. The vessel 18 may also be a barrel 18" with an end rim 19' acting as a dedicated lifting point, as shown in fig. 9b. The vessel 18 may further be a bucket 18'" with a handle 21' connected to the body of the bucket 18''', as shown in fig. 9c. The vessel 18 may even further be a mixing bowl 18'''' for commercial mixers having an outer end rim 19" acting as a dedicated lifting point, as shown in fig. 9d.

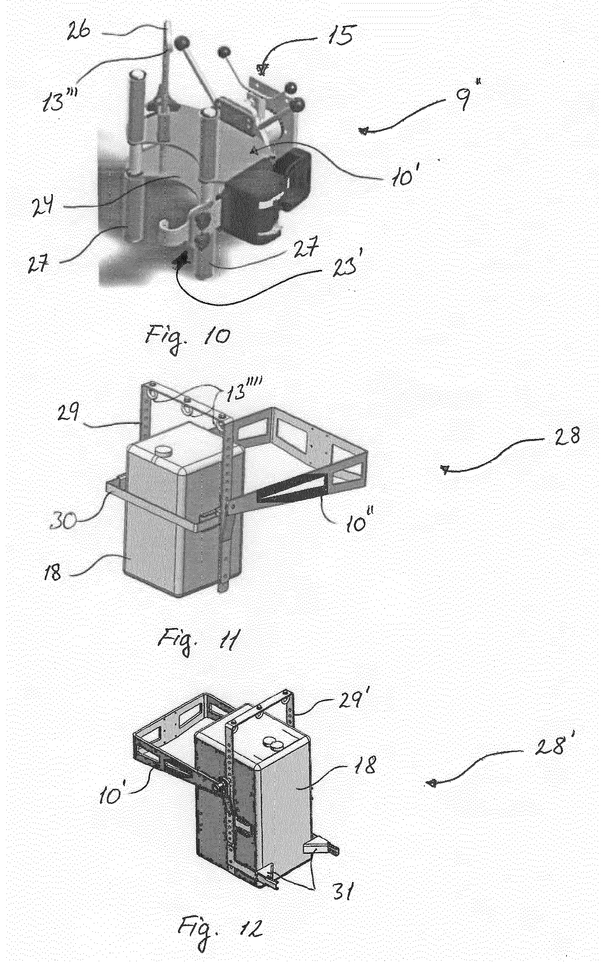

Fig. 10 shows a second embodiment of the handling tool 9" with a manipulating unit 15 attached to the interface of the frame structure 10'. Here, a wheel with a strap 23' is arranged at one side of the frame structure 10'. The strap 23' is able to be extended around the side of the vessel 18 and attached to the opposite side of the frame structure 10'. The edge surfaces of the plate-like elements 24 facing the vessel 18 are shaped according to the outer shape of the vessel 18.

Here, the gripping element 13'" is arranged at the free end of an L-shaped boom 26 and configured to grip the handle 21 of the vessel 18. The boom 26 is connected to at least one of the plate-like elements 24.

Further, additional support elements 27 are arranged at either side of the frame structure 10'. The additional support elements 27 are here shaped as rods, e.g. with paddings, to add support to the sides of the vessel 18 during the turning or tipping.

Fig. 11 shows a third embodiment of the handling tool 28 comprising a U-shaped frame structure 10". The frame structure 10" has an intermediate element on which the mounting interface for the lifting unit 4 or manipulating unit 15 is arranged. The frame structure 10" further has two legs acting as the support elements 11a, 11b.

A U-shaped boom 29 is pivotal connected to the free ends of the two legs of the frame structure 10". The connections define a tipping axis for the vessel 18. Here, the vessel 18 is a can, preferably a plastic can, with an integrated handle (not shown).

Once the vessel 18 is positioned within the handling tool 28, as shown in fig. 11, a removable support element 30 is secured to the boom 29. The removable support element 30 is configured to add support to the vessel 18 during the tipping.

Fig. 12 shows the handling tool 28' with a second embodiment of the boom 29' where each leg of the boom has a projecting sub-arm. On each sub-arm a spring-loaded support element 31 is arranged. The support elements 31 are configured to be pushed to the sides when the handling tool 28' is positioned relative to the vessel 18. Once the vessel 18 is in the correct position, the support elements 31 are forced back to their initial positions by the springs (not shown).

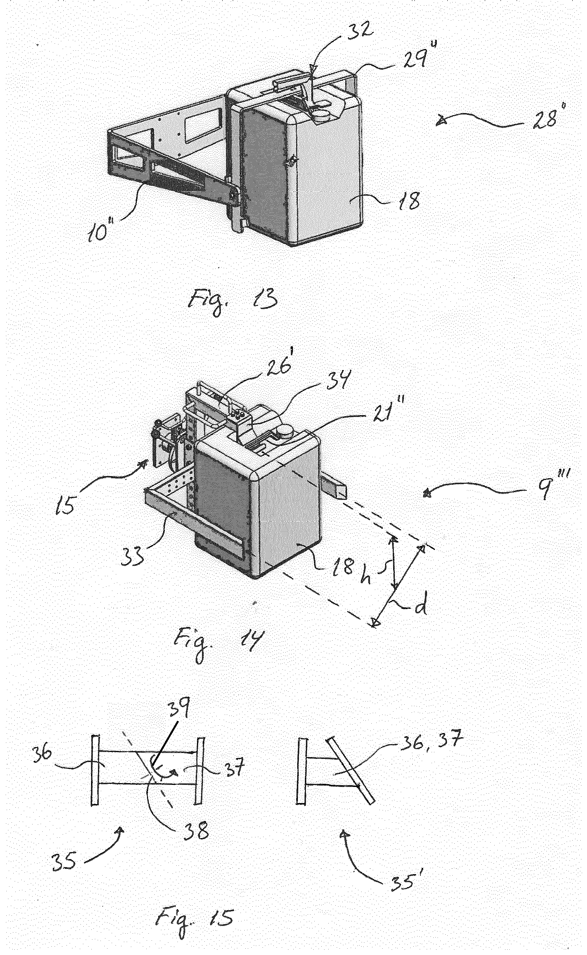

Fig. 13 shows the handling tool 28" with an alternative embodiment of the gripping element 32, where the safety mechanism is integrated with the gripping element 32 to form a combined unit.

Here, the gripping element 32 is shaped as a turnable handle with a locking element, where the gripping element 32 further comprises two side elements configured to be positioned on opposite sides of the handle 21" of the vessel 18.

Once the handle 21" is correctly positioned between the side elements, the handle is turned and the locking element is moved into engagement with the opposite side element. Thereby the handle 32 locks inside the gripping element 32.

The gripping element 32 is unlocked by simply turning the handle in the opposite direction.

Fig. 14 shows a forth embodiment of the handling tool 9'" where the handling tool 9'" is able to be adapted to fit different sizes and shapes of the vessel 18. Here, the first and second support elements are formed by a U-shaped support structure 33. The support structure 33 is configured as an adjustable structure where the distance, d, between the first and second support elements may be varied. Additionally or alternatively, the gripping element 34 is arranged on an L-shaped boom 26' having an adjustable structure. This adjustable boom 26' enables at least the height, h, of the gripping element 34 to be varied. The length of the boom 26' or the location of the gripping element 34 on the boom 26' is optionally also adjustable so that the distance between the gripping element 34 and the intermediate part of the support structure 33. The handling tool 9'" is thus able to be adjusted to fit different sizes and shapes of the vessel 18.

The boom 26" is optionally fitted with one or more handles that may be used to turn the handling tool 9'" and vessel 18 via the manipulating unit 15.

Finally, the gripping element 34 is shaped so that it is able to grip the handle 21" of a variety of vessels 18 while ensuring a safe lift.

Fig. 15 shows a first embodiment of an adapter 35 configured to be installed between the lifting unit 4 and the handling tool 9. The adapter 35 comprises a first part 36 with a first interface configured to be mounted to the interface of the lifting unit 4. The adapter 35 further comprises a second part 37 with a second interface configured to be mounted to the interface of the handling tool 9 or the manipulating unit 15.

The first part 36 is rotatably connected to the second part 37 via a rotatable interface 38, as illustrated in fig. 15. When installed, the second part 37 and thus the handling tool 9 is able to rotate around a rotation axis 39 relative to the lifting unit 4 and the first part 36.

In a second embodiment of the adapter 35' the first and second interfaces are angled relative to each other, as illustrated in fig. 15. The first and second parts 36, 37 form the body of the adapter 35', wherein the body instead of a straight profile may have a bend or curved profile.

## Claims

1. A lifting device, comprising:
- a mobile base,
- a support frame arranged on the mobile base,
- the support frame comprises a lifting unit configured to raise or lower a vessel in a lifting direction between a first position and a second position,
- a handling tool connected to the lifting unit, the handling tool comprises at least one gripping element configured to grip a vessel,
- a manipulating unit configured to at least turn or tip the vessel in a turning or tipping direction between a first orientation and a second orientation, the manipulating unit being arranged on the handling tool or between the handling tool and the lifting unit,
**characterised in that** the handling tool further comprises at least one support element configured to add support to a side of the vessel during turning or tipping, and that the at least one gripping element is arranged relative to the at least one support element and configured to grip a dedicated lifting point on the vessel.

2. The lifting device according to claim 1, **characterised in that** the handling tool further comprises a safety mechanism configured to lock the at least one gripping element when gripping the lifting point.

3. The lifting device according to claim 1 or 2, **characterised in that** the at least one support element comprises a first support element and at least a second support element, the first and second support elements being arranged at a distance from each other where the distance corresponds to at least an outer dimension of the vessel.

4. The lifting device according to any one of claims 1 to 3, **characterised in that** the at least one gripping element is arranged at a height above the at least one support element in the lifting direction, wherein the gripping element and/or the support element is adjustable in the height direction and/or in the distance direction.

5. The lifting device according to any one of claims 1 to 4, **characterised in that** the at least one support element is configured to secure the vessel to the handling tool by applying a clamping or holding force.

6. The lifting device according to any one of claims 1 to 5, **characterised in that** the safety mechanism is configured to be powered by an energy source or mechanically by an operator.

7. The lifting device according to any one of claims 1 to 6, **characterised in that** the lifting device further comprises a mounting arm configured to be mounted between the lifting unit and the handling tool.

8. The lifting device according to any one of claims 1 to 7, **characterised in that** the manipulating unit is configured to be powered by an energy source or mechanically by an operator.

9. The lifting device according to any one of claims 1 to 8, **characterised in that** the dedicated lifting point is a handle, a lifting bracket or a rim arranged at one end of the vessel.

10. A handling tool for lifting vessels, comprising:
- an interface configured to be mounted directly or indirectly to a lifting unit of a lifting device according to any one of claims 1 to 9,
- at least one gripping element configured to grip a dedicated lifting point on a vessel, and
- at least one support element configured to add support to a side of the vessel during turning or tipping of the vessel.

11. The handling tool according to claim 10, **characterised in that** the handling tool further comprises an integrated manipulating unit configured at least turn or tip the vessel in a turning or tipping direction between a first orientation and a second orientation.

12. The handling tool according to claim 11, **characterised in that** the handling tool further comprises a mounting arm, where one end of the mounting arm is connected to the manipulating unit and the other end of the mounting arm is configured to be mounted to the lifting unit.

13. The handling tool according to any one of claims 10 to 12, **characterised in that** the at least one gripping element is arranged on a boom configured to be positioned above the vessel.

14. The handling tool according to any one of claims 10 to 12, **characterised in that** the at least one gripping element is arranged on a frame element on the handling tool.

15. Use of a lifting device according to any one of claims 1 to 9 or a handling tool according to any one of claims 10 to 14 to lift vessels with a dedicated lifting point.
